# EUROPEAN PATENT APPLICATION

(11) **EP 4 593 468 A1**
(43) Date of publication of application: **30.07.2025**
(21) Application number: 25151655.5
(22) Date of filing: 14.01.2025
(51) Int. Cl.: H04W 48/04, H04M 1/72457, H04W 4/02, H04W 88/06

(54) **WIRELESS STATION AND COMMUNICATION METHOD**

(30) Priority: 18.01.2024 JP 2024005773
(71) Applicant: Icom Incorporated, Osaka 547-0004 (JP)
(72) Inventor: TOKUYAMA, Yukihiro, Osaka, 547-0004 (JP); NISHIGUCHI, Yasuhiro, Osaka, 547-0004 (JP)
(74) Representative: v. Bezold & Partner Patentanwälte - PartG mbB

(57) **Abstract**

A wireless station (1) includes a switching instruction acceptor (11), a position determiner (12), a mode selector (13), a signal processing circuit (14), and a communicator (15). The position determiner (12) determines, with respect to at least one area that indicates a geographical range associated with one of telecommunication modes of the wireless station (1), whether or not the wireless station is located within one of the areas. When the switching instruction acceptor (11) accepts an instruction of switching to a transmission mode, the mode selector (13) selects a first telecommunication mode of an area within which the wireless station (1) is determined to be located or a second telecommunication mode in a case where the wireless station is not located within any of the areas. The signal processing circuit (14) generates, from an input signal, transmission data matching a telecommunication mode selected by the mode selector (13).

## Description

This application relates to a wireless station and a communication method.

A wireless station installed on a ship performs maritime wireless communication, specifically analog wireless communication in a frequency band for a marine very high frequency (VHF), during a voyage. When the ship has anchored in a harbor, the wireless station installed on the ship performs wireless communication with a wireless station used ashore, using a land business wireless frequency band that is close to a frequency band for the marine VHF. An example of a wireless station that performs wireless communication in a plurality of frequency bands in this way is disclosed in Unexamined Japanese Patent Application Publication No. 2006-148845.

A wireless station according to a first aspect of the present disclosure is a wireless station to perform communication in a plurality of telecommunication modes in which at least one of used frequency bands and telecommunication standards are different from each other and includes:
a position determiner to determine, with respect to at least one area that indicates a geographical range associated with one of the telecommunication modes and is determined in advance, whether or not the wireless station is located within one of the at least one area;
a switching instruction acceptor to accept an instruction to switch the wireless station between a transmission mode and a reception mode;
a mode selector to select, when the switching instruction acceptor accepts an instruction of switching to the transmission mode, a first telecommunication mode corresponding to the one of the at least one area within which the wireless station is located among the plurality of telecommunication modes in a case where the wireless station is determined to be located within the one of the at least one area by the position determiner and a second telecommunication mode that is the telecommunication mode different from the first telecommunication mode in a case where the wireless station is determined not to be located within any of the areas by the position determiner;
a signal processing circuit to generate, from an input signal, transmission data matching the first telecommunication mode or the second telecommunication mode that is selected by the mode selector; and
a communicator to generate a transmission signal from the transmission data generated by the signal processing circuit and transmit the transmission signal.

Preferably, the communicator receives a signal in the used frequency band of each of the telecommunication modes, and
in a case where the switching instruction acceptor accepts an instruction of switching to the transmission mode and the wireless station is determined to be located within the one of the at least one area by the position determiner, the mode selector selects the second telecommunication mode when the communicator has been receiving a signal in the used frequency band of the second telecommunication mode during a target period that is a latest predetermined period and selects the first telecommunication mode when the communicator has not received a signal in the used frequency band of the second telecommunication mode during the target period.

Preferably, in a case where the switching instruction acceptor accepts an instruction of switching to the transmission mode and the wireless station is determined not to be located within any of the at least one area by the position determiner, the mode selector selects the first telecommunication mode when the communicator has been receiving a signal in the used frequency band of the first telecommunication mode during the target period and selects the second telecommunication mode when the communicator has not received a signal in the used frequency band of the first telecommunication mode during the target period.

Preferably, in a case where the switching instruction acceptor accepts an instruction of switching to the transmission mode and the wireless station is determined to be located within the one of the at least one area by the position determiner, the mode selector selects the first telecommunication mode conforming to a telecommunication standard of a public network.

Preferably, the position determiner determines whether or not the wireless station is located within the one of the at least one area included in a region in which the wireless station can connect to the public network.

Preferably, in a case where the switching instruction acceptor accepts an instruction of switching to the transmission mode and the wireless station is determined not to be located within any of the at least one area by the position determiner, the mode selector selects the second telecommunication mode for analog wireless communication that uses a marine very high frequency (VHF) band as the used frequency band.

Preferably, in a case where the switching instruction acceptor accepts an instruction of switching to the transmission mode and the wireless station is determined not to be located within any of the at least one area by the position determiner, the mode selector selects the second telecommunication mode for digital wireless communication that uses a frequency band allocated to business wireless communication as the used frequency band.

Preferably, in a case where the switching instruction acceptor accepts an instruction of switching to the transmission mode and the wireless station is determined to be located within the one of the at least one area by the position determiner, the mode selector selects the first telecommunication mode for analog wireless communication that uses a frequency band for a marine VHF as the used frequency band.

Preferably, the position determiner determines whether or not the wireless station is located within the one of the at least one area included in a region in which analog wireless communication that uses a frequency band for the marine VHF can be performed.

Preferably, in a case where the switching instruction acceptor accepts an instruction of switching to the transmission mode and the wireless station is determined not to be located within any of the areas by the position determiner, the mode selector selects the second telecommunication mode conforming to a telecommunication standard of a public network.

Preferably, the switching instruction acceptor accepts an instruction of switching between the transmission mode and the reception mode from a single operation switch that performs switching between the transmission mode and the reception mode by a mechanical action.

Preferably, the at least one area is a plurality of areas, and
the position determiner determines, with respect to the plurality of areas, whether or not the wireless station is located within one of the plurality of areas.

Preferably, the used frequency bands and the telecommunication standards of the first telecommunication modes each of which corresponds to one of the plurality of areas are the same as each other.

Preferably, at least one of the used frequency band and the telecommunication standard of the first telecommunication mode corresponding to at least one of the plurality of areas is different from a corresponding one of the used frequency band and the telecommunication standard of the first telecommunication mode corresponding to another one of the plurality of areas.

A communication method according to a second aspect of the present disclosure is a communication method performed by a wireless station to perform communication in a plurality of telecommunication modes in which at least one of used frequency bands and telecommunication standards are different from each other and includes:
determining, with respect to at least one area that indicates a geographical range associated with one of the telecommunication modes and is determined in advance, whether or not the wireless station is located within one of the at least one area;
accepting an instruction to switch the wireless station between a transmission mode and a reception mode;
selecting, when an instruction of switching to the transmission mode is accepted, a first telecommunication mode corresponding to the one of the at least one area within which the wireless station is located among the plurality of telecommunication modes in a case where the wireless station is determined to be located within the one of the at least one area and a second telecommunication mode that is the telecommunication mode different from the first telecommunication mode in a case where the wireless station is determined not to be located within any of the at least one area;
generating, from an input signal, transmission data matching the selected first telecommunication mode or second telecommunication mode; and
generating a transmission signal from the transmission data and transmitting the transmission signal.

According to the present disclosure, the wireless station selects the first telecommunication mode when the wireless station is located within an area and selects the second telecommunication mode when the wireless station is not located within the area. The wireless station generates, from an input signal, transmission data matching the selected first telecommunication mode or second telecommunication mode and transmits a transmission signal generated from the transmission data. Because of this configuration, a wireless station and a communication method that are capable of performing communication in a plurality of telecommunication modes with a simple configuration can be provided.

A more complete understanding of this application can be obtained when the following detailed description is considered in conjunction with the following drawings, in which:
FIG. 1 is a diagram illustrating an example of communication between a wireless station according to Embodiment 1 and other communication devices;
FIG. 2 is a block diagram illustrating a configuration of the wireless station according to Embodiment 1;
FIG. 3 is a block diagram illustrating another configuration of the wireless station according to Embodiment 1;
FIG. 4 is a block diagram illustrating a hardware configuration of the wireless station according to Embodiment 1;
FIG. 5 is a block diagram illustrating a variation of the hardware configuration of the wireless station according to Embodiment 1;
FIG. 6 is a block diagram illustrating an implementation example of the wireless station according to Embodiment 1;
FIG. 7 is a flowchart illustrating an example of mode selection processing that the wireless station according to Embodiment 1 performs;
FIG. 8 is a block diagram illustrating a configuration of a first variation of the wireless station according to Embodiment 1;
FIG. 9 is a block diagram illustrating a configuration of a second variation of the wireless station according to Embodiment 1;
FIG. 10 is a block diagram illustrating a configuration of a third variation of the wireless station according to Embodiment 1;
FIG. 11 is a diagram illustrating another example of the communication between the wireless station according to Embodiment 1 and other communication devices;
FIG. 12 is a diagram illustrating still another example of the communication between the wireless station according to Embodiment 1 and other communication devices;
FIG. 13 is a block diagram illustrating a configuration of a fourth variation of the wireless station according to Embodiment 1;
FIG. 14 is a flowchart illustrating another example of the mode selection processing that the wireless station according to Embodiment 1 performs;
FIG. 15 is a diagram illustrating an example of communication between a wireless station according to Embodiment 2 and other communication devices;
FIG. 16 is a block diagram illustrating a configuration of the wireless station according to Embodiment 2;
FIG. 17 is a flowchart illustrating an example of mode selection processing that the wireless station according to Embodiment 2 performs; and
FIG. 18 is a flowchart illustrating another example of the mode selection processing that the wireless station according to Embodiment 2 performs.

A wireless communication device disclosed in Unexamined Japanese Patent Application Publication No. 2006-148845 performs transmission processing at a first frequency when a first push to talk (PTT) switch is pressed and performs transmission processing at a second frequency when a second PTT switch is pressed. Since in the wireless communication device, a PTT switch is installed for each frequency, operation of the wireless communication device is complicated.

The present disclosure has been made in consideration of the above-described circumstances, and an objective of the present disclosure is to provide a wireless station and a communication method that are capable of performing communication in a plurality of telecommunication modes in which at least one of used frequency bands and telecommunication standards are different from each other by a simple operation.

A wireless station and a communication method according to embodiments of the present disclosure are described below in detail with reference to the drawings. Note that the same or equivalent parts are designated by the same reference numerals.

### Embodiment 1

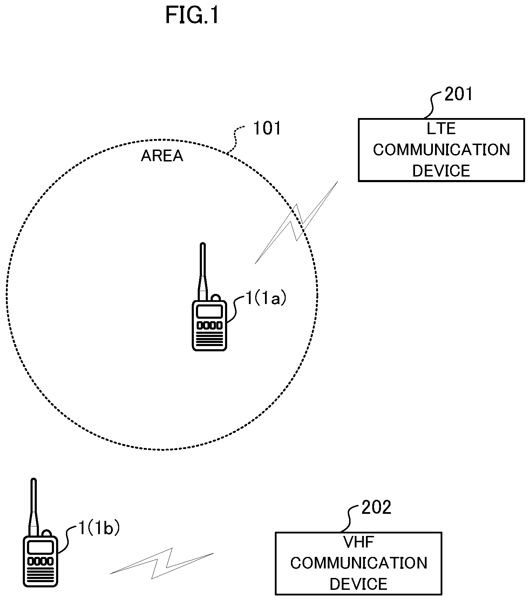

A wireless station 1 illustrated in FIG. 1 is a wireless communication device that is capable of performing communication in a plurality of telecommunication modes in which at least one of used frequency bands and telecommunication standards are different from each other. As an example, the wireless station 1 performs communication in either a telecommunication mode for analog wireless communication in a 150 MHz band that is a frequency band for a marine very high frequency (VHF) or a telecommunication mode for wireless communication conforming to a public network standard, such as long term evolution (LTE) communication. The wireless station 1 selects one of the telecommunication modes according to whether or not the wireless station 1 is located within at least one area that indicates a geographical range associated with one of the telecommunication modes and that is determined in advance, and performs communication in the selected telecommunication mode. A telecommunication mode used by the wireless station 1 and an association between an area and a telecommunication mode are arbitrarily set.

In the example in FIG. 1, an area 101 associated with the telecommunication mode for the LTE communication is defined. The wireless station 1 communicates with an LTE communication device 201 in the LTE communication when the wireless station 1 is located within the area 101. The LTE communication device 201 is an arbitrary communication device that is capable of connecting to an LTE public network, such as an internet protocol (IP) transceiver and a smartphone. The wireless station 1 communicates with a VHF communication device 202 with the marine VHF when the wireless station 1 is not located within the area 101, that is, is located outside the area 101. The VHF communication device 202 is, for example, a maritime wireless communication device that is installed on a ship. Since the wireless station 1 switches the telecommunication mode in an automated manner according to whether or not the device itself is located within the area 101, the wireless station 1 does not require a push to talk (PTT) switch for each frequency and has a simple configuration.

The area 101 indicates a geographical range that is arbitrarily determined based on a center position and radius. An inside of the area 101 indicates a boundary of the area 101 and a region on the inner side of the boundary of the area 101. The center position of the area 101 is uniquely identified by, for example latitude and longitude. The area 101 is preferably included in a region in which communication in a telecommunication mode associated with the inside of the area 101 can be performed, for example, a region in which the wireless station 1 can connect to the LTE public network.

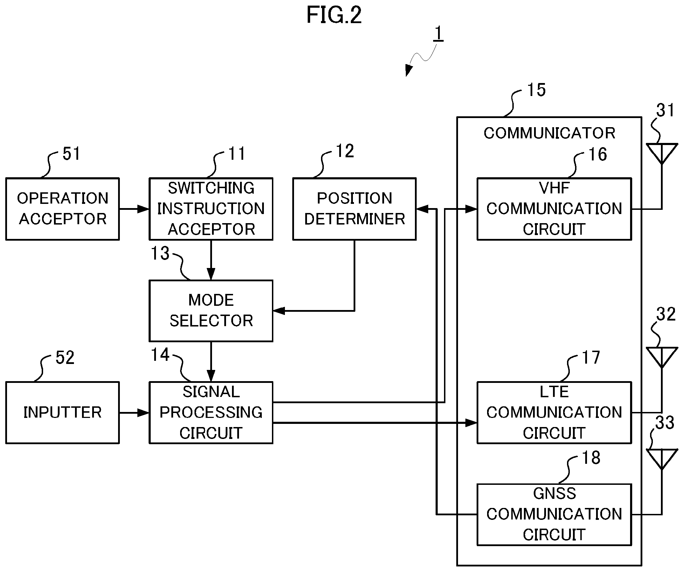

As illustrated in FIG. 2, the wireless station 1 includes a switching instruction acceptor 11, a position determiner 12, a mode selector 13, a signal processing circuit 14, and a communicator 15. The communicator 15 includes a VHF communication circuit 16, an LTE communication circuit 17, and a global navigation satellite system (GNSS) communication circuit 18. The wireless station 1 includes antennas 31, 32, and 33 that correspond to the VHF communication circuit 16, the LTE communication circuit 17, and the GNSS communication circuit 18, respectively, an operation acceptor 51, and an inputter 52.

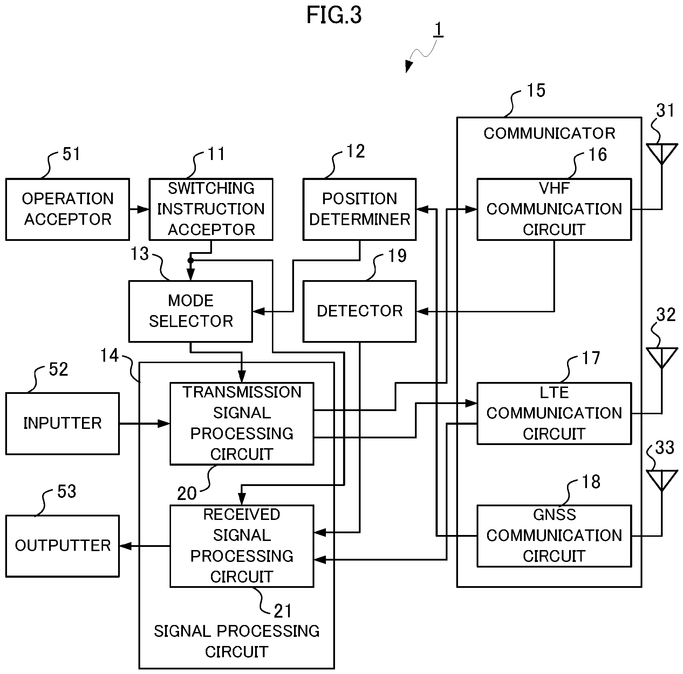

Although in FIG. 2, only a transmission function of the wireless station 1 is illustrated, the wireless station 1 may include a reception function as illustrated in FIG. 3. The wireless station 1 illustrated in FIG. 3 includes, in addition to the configuration of the wireless station 1 illustrated in FIG. 2, a detector 19 and an outputter 53. The signal processing circuit 14 includes a transmission signal processing circuit 20 on the transmission side and a received signal processing circuit 21 on the reception side.

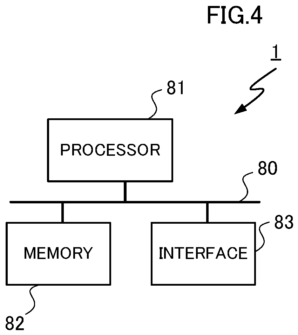

The wireless station 1 includes a processor 81, a memory 82, and an interface 83 as an example of a hardware configuration to control respective functional components, as illustrated in FIG. 4. The processor 81, the memory 82, and the interface 83 are connected to one another by a bus 80. The processor 81 includes a transistor, other electronic circuits, and the like and is considered as a circuit or a processor circuit. Respective functions of the wireless station 1 are achieved by the processor 81 executing programs stored in the memory 82.

For example, the interface 83 is a component to connect the wireless station 1 to other communication devices, specifically each of the LTE communication device 201 and the VHF communication device 202, and establish communication between the wireless station 1 and the communication devices. Specifically, the wireless station 1 is connected to a public network to which the LTE communication device 201 is connected and the VHF communication device 202 via the interface 83. The interface 83 has a plurality of types of interface modules as needed basis.

Although in the example in FIG. 4, the wireless station 1 includes one processor 81 and one memory 82, the wireless station 1 may include a plurality of processors 81 and a plurality of memories 82. In this case, the respective functions of the wireless station 1 are only required to be executed by the plurality of processors 81 and the plurality of memories 82 cooperating with one another.

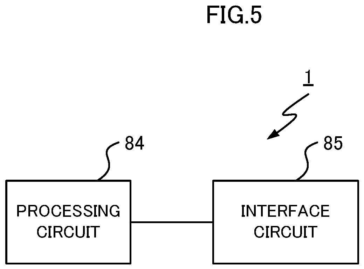

As another example, the wireless station 1 may include a processing circuit 84 and an interface circuit 85 as a hardware configuration to control respective functional components, as illustrated in FIG. 5. The processing circuit 84 is connected to other communication devices via the interface circuit 85. Specifically, the wireless station 1 is connected to the public network to which the LTE communication device 201 is connected and the VHF communication device 202 via the interface circuit 85.

When the processing circuit 84 is dedicated hardware, the processing circuit 84 includes, for example, a single circuit, a composite circuit, a processor, an application specific integrated circuit (ASIC), a field programmable gate array (FPGA), or a combination thereof. Respective functional components of the wireless station 1 may be achieved by individual processing circuits 84, or the respective functional components of the wireless station 1 may be achieved by a common processing circuit 84.

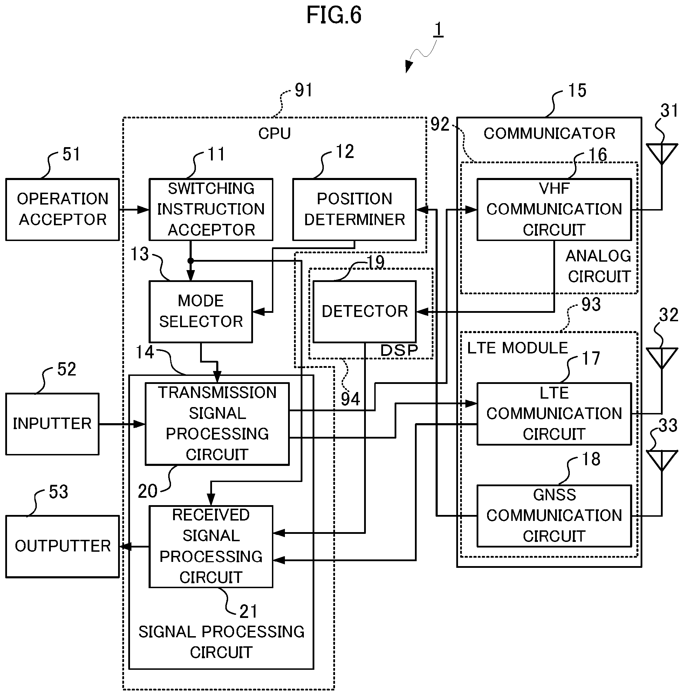

Some of the respective functions of the wireless station 1 may be achieved by dedicated hardware, and the other functions may be achieved by software or firmware. As illustrated in FIG. 6, for example, the switching instruction acceptor 11, the position determiner 12, the mode selector 13, and the signal processing circuit 14 are achieved by a central processing unit (CPU) 91. The VHF communication circuit 16 is achieved by an analog circuit 92, and the LTE communication circuit 17 and the GNSS communication circuit 18 are achieved by an LTE module 93. On this occasion, the GNSS communication circuit 18 is achieved by a GNSS module incorporated in the LTE module 93. Note that the GNSS communication circuit 18 may be achieved by a GNSS unit independent of the LTE module 93. The detector 19 is achieved by a digital signal processor (DSP) 94.

The switching instruction acceptor 11 accepts an instruction to switch the wireless station 1 between a transmission mode and a reception mode from the operation acceptor 51. The operation acceptor 51 preferably includes a PTT switch that is a single operation switch to switch the wireless station 1 between the transmission mode and the reception mode by a mechanical action.

Specifically, when the PTT switch is pressed, the switching instruction acceptor 11 accepts an instruction of switching from the reception mode to the transmission mode. When the switching instruction acceptor 11 accepts an instruction of switching from the reception mode to the transmission mode, the switching instruction acceptor 11 notifies the mode selector 13 of having accepted an instruction of switching from the reception mode to the transmission mode.

When the PTT switch ceases to be pressed, the switching instruction acceptor 11 accepts an instruction of switching from the transmission mode to the reception mode. When the switching instruction acceptor 11 accepts an instruction of switching from the transmission mode to the reception mode, the switching instruction acceptor 11 notifies the received signal processing circuit 21 of having accepted an instruction of switching from the transmission mode to the reception mode.

The position determiner 12 determines whether or not the wireless station 1 is located within the area 101, based on position information of the wireless station 1 acquired from the GNSS communication circuit 18 in the communicator 15. It is assumed that the position determiner 12 retains predetermined information about the area 101, specifically information about the latitude and longitude of the center position of the area 101 and the radius of the area 101. The position determiner 12 determines whether or not the wireless station 1 is located within the area 101, based on position information that recommended minimum specific (RMC) data output from the GNSS communication circuit 18 indicate. The position determiner 12 outputs a determination result to the mode selector 13.

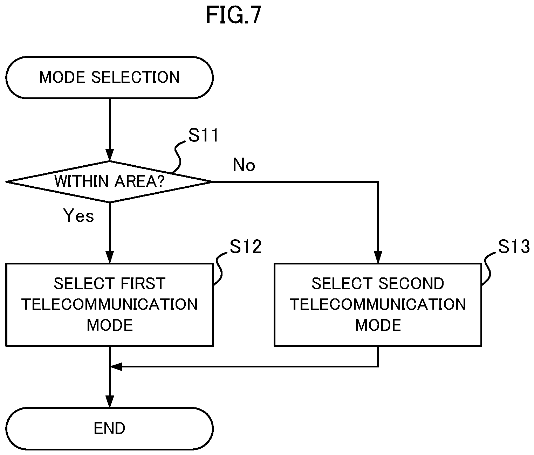

When the switching instruction acceptor 11 accepts an instruction of switching from the reception mode to the transmission mode, the mode selector 13 selects a telecommunication mode according to the determination result of the position determiner 12. Specifically, when the mode selector 13 is notified of having accepted an instruction of switching from the reception mode to the transmission mode by the switching instruction acceptor 11, the mode selector 13 starts mode selection processing illustrated in FIG. 7.

When the determination result acquired from the position determiner 12 indicates that the wireless station 1 is located within the area 101 (step S11; Yes), the mode selector 13 selects a first telecommunication mode (step S12). For example, the first telecommunication mode associated with the area 101 is a telecommunication mode conforming to a telecommunication standard of a public network, specifically a telecommunication mode for the LTE communication.

When the determination result acquired from the position determiner 12 indicates that the wireless station 1 is not located within the area 101 (step S11; No), the mode selector 13 selects a second telecommunication mode (step S13). For example, the second telecommunication mode is a telecommunication mode for analog wireless communication using a frequency band for the marine VHF as a used frequency band.

When the processing in step S12 or S13 is finished, the mode selector 13 terminates the mode selection processing. The mode selector 13 outputs the first telecommunication mode selected in step S12 or the second telecommunication mode selected in step S13 to the transmission signal processing circuit 20 included in the signal processing circuit 14.

When the transmission signal processing circuit 20 illustrated in FIG. 6 acquires the selected telecommunication mode from the mode selector 13, the transmission signal processing circuit 20 generates, from an input signal, transmission data matching the first telecommunication mode or the second telecommunication mode that is selected by the mode selector 13. Specifically, the transmission signal processing circuit 20 generates transmission data by performing signal processing matching the first telecommunication mode or the second telecommunication mode on a sound signal that is input from the inputter 52 including, for example, a microphone and is analog/digital (A/D) converted by a not-illustrated A/D converter.

Specifically, when the telecommunication mode acquired from the mode selector 13 is the first telecommunication mode for the LTE communication, the transmission signal processing circuit 20 generates sound packets from the sound signal and outputs the generated sound packets to the LTE communication circuit 17. When the telecommunication mode acquired from the mode selector 13 is the second telecommunication mode for communication with the marine VHF, the transmission signal processing circuit 20 generates a modulated signal by performing modulation processing on the sound signal and outputs the generated modulated signal to the VHF communication circuit 16. It is assumed that the transmission signal processing circuit 20 retains in advance information about used frequency bands and telecommunication standards corresponding to the first telecommunication mode and the second telecommunication mode.

The communicator 15 communicates with other communication devices, specifically the LTE communication device 201 and the VHF communication device 202 illustrated in FIG. 1 and not-illustrated GNSS satellites. When the wireless station 1 is in the transmission mode, the communicator 15 illustrated in FIG. 6 generates a transmission signal from transmission data generated by the transmission signal processing circuit 20, specifically a modulated signal or sound packets, and transmits the transmission signal.

Specifically, the VHF communication circuit 16 applies signal processing, such as frequency conversion, filtering, and amplification, to the modulated signal acquired from the transmission signal processing circuit 20 via a not-illustrated digital/analog (D/A) converter and generates a transmission signal. The VHF communication circuit 16 outputs the transmission signal to a predetermined channel, such as a call/response channel, via the antenna 31. Subsequently, when the VHF communication device 202 responds, communication between the wireless station 1 and the VHF communication device 202 is enabled.

The LTE communication circuit 17 applies signal processing, such as modulation, frequency conversion, filtering, and amplification, to the sound packets acquired from the transmission signal processing circuit 20 and generates a transmission signal. The LTE communication circuit 17 transmits the generated transmission signal to the LTE communication device 201 that is a destination associated with the area 101, via the antenna 32.

The communicator 15 receives a signal in a used frequency band of a corresponding telecommunication mode. Specifically, the communicator 15 receives a signal in the 150 MHz band that is the used frequency band of the marine VHF or a signal in a frequency band, such as an 800 MHz band, that is the used frequency band of the LTE communication.

The VHF communication circuit 16 applies signal processing, such as frequency conversion, filtering, and amplification, to an electrical signal acquired from the antenna 31 that generates an electrical signal based on captured radio waves, and generates a received signal. The VHF communication circuit 16 outputs the generated received signal to the detector 19.

The LTE communication circuit 17 applies signal processing, such as frequency conversion, filtering, amplification, and demodulation, to an electrical signal acquired from the antenna 32 that generates an electrical signal based on captured radio waves, and generates sound packets. The LTE communication circuit 17 outputs the generated sound packets to the received signal processing circuit 21.

The GNSS communication circuit 18 applies signal processing, such as frequency conversion, filtering, and amplification, to an electrical signal acquired from the antenna 33 that captures radio waves transmitted from the GNSS satellites and generates an electrical signal based on the captured radio waves, and extracts position information. The GNSS communication circuit 18 outputs the position information to the position determiner 12.

The detector 19 generates a demodulated signal by detecting a received signal and outputs the demodulated signal to the received signal processing circuit 21.

When the received signal processing circuit 21 acquires the demodulated signal from the detector 19, the received signal processing circuit 21 outputs the demodulated signal to the outputter 53 via a not-illustrated D/A converter. When the received signal processing circuit 21 acquires the sound packets from the LTE communication circuit 17, the received signal processing circuit 21 generates a sound signal from the sound packets and outputs the sound signal to the outputter 53 via the D/A converter.

The outputter 53 includes, for example, a speaker. The outputter 53 outputs, from the speaker, an analog sound signal acquired from the received signal processing circuit 21 via the D/A converter.

The wireless station 1 having the above-described configuration is located within or outside the area 101, as illustrated in FIG. 1. To distinguish wireless stations 1 from each other, the wireless station 1 located within the area 101 and the wireless station 1 located outside the area 101 are respectively referred to a wireless station 1a and a wireless station 1b.

A mode selector 13 included in the wireless station 1a selects the first telecommunication mode for the LTE communication since the wireless station 1a is located within the area 101. As a result, the wireless station 1a communicates with the LTE communication device 201. A mode selector 13 included in the wireless station 1b selects the second telecommunication mode for communication with the marine VHF since the wireless station 1b is located outside the area 101. As a result, the wireless station 1b communicates with the VHF communication device 202.

As described in the foregoing, when the wireless station 1 according to Embodiment 1 accepts an instruction of switching from the reception mode to the transmission mode, the wireless station 1 transmits a transmission signal matching the first telecommunication mode for the LTE communication or the second telecommunication mode for communication with the marine VHF, depending on whether or not the wireless station 1 is located within the area 101. Since the wireless station 1 switches the telecommunication mode in an automated manner depending on whether or not the device itself is located within the area 101, the wireless station 1 does not require a PTT switch for each frequency and has a simple configuration.

The wireless station 1 according to Embodiment 1 can be subjected to various modifications in addition to being configured as described above.

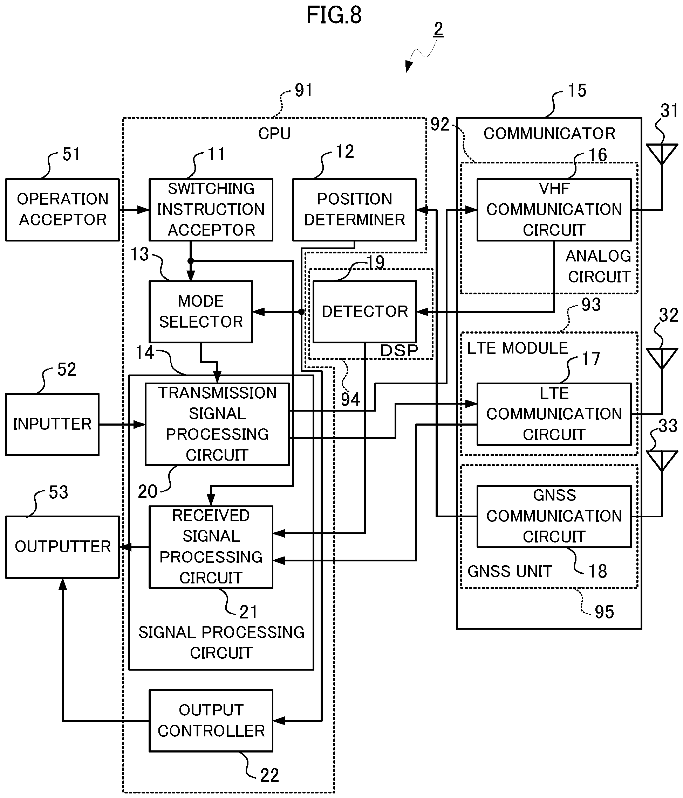

First, the wireless station 1 may display on a display screen whether or not the wireless station 1 is located within the area 101. A wireless station 2 illustrated in FIG. 8 further includes, in addition to the configuration of the wireless station 1, an output controller 22. The output controller 22 is achieved by a CPU 91. A GNSS communication circuit 18 is achieved by a GNSS unit 95. An outputter 53 includes a speaker and a display screen. The output controller 22 acquires a determination result from a position determiner 12. The output controller 22 controls the outputter 53 to display the determination result of the position determiner 12 on the display screen included in the outputter 53.

Specifically, when the wireless station 2 is determined to be located within the area 101 by the position determiner 12, the output controller 22 causes the outputter 53 to display on the display screen included in the outputter 53 that communication in a first mode, for example, the LTE communication, can be performed. When the wireless station 2 is determined to be located outside the area 101 by the position determiner 12, the output controller 22 causes the outputter 53 to display on the display screen included in the outputter 53 that communication in a second mode, for example, communication with the marine VHF, can be performed.

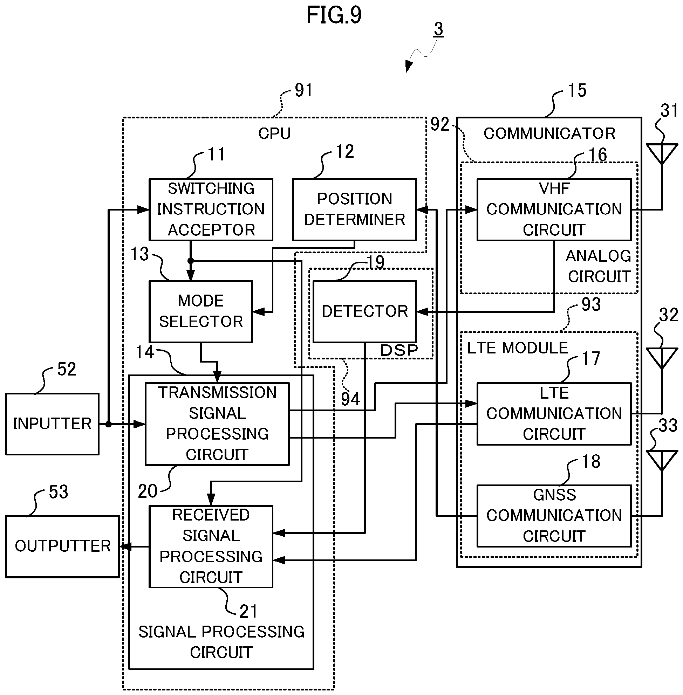

Second, the wireless station 1 may accept an instruction of switching between the transmission mode and the reception mode, based on existence or nonexistence of an input signal, without depending on an operation of the PTT switch. When a switching instruction acceptor 11 included in a wireless station 3 illustrated in FIG. 9 detects an input of a voice at an inputter 52, the switching instruction acceptor 11 accepts an instruction of switching from the reception mode to the transmission mode. When a state in which a voice is input at the inputter 52 is brought into a state in which input of a voice cannot be detected, the switching instruction acceptor 11 accepts an instruction of switching from the transmission mode to the reception mode.

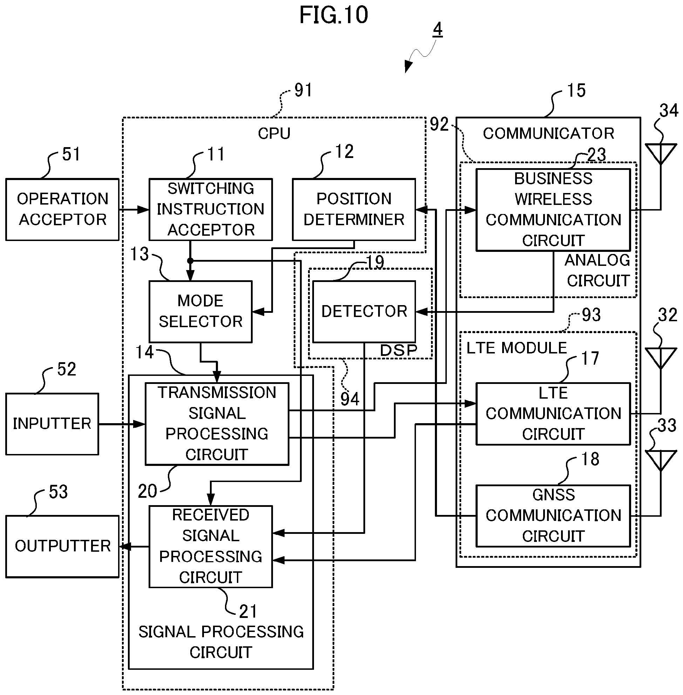

Third, the telecommunication mode of the wireless station 1 is not limited to the above-described example. For example, a wireless station 4 illustrated in FIG. 10 performs communication in either a telecommunication mode for the LTE communication or a telecommunication mode for digital wireless communication that uses a frequency band allocated to business wireless communication as a used frequency band. A communicator 15 included in the wireless station 4 includes a business wireless communication circuit 23. The wireless station 4 includes an antenna 34 corresponding to the business wireless communication circuit 23. On acceptance, by a switching instruction acceptor 11 included in the wireless station 4, of an instruction of switching from the reception mode to the transmission mode, a mode selector 13 included in the wireless station 4 selects a first telecommunication mode for the LTE communication when the wireless station 4 is located within the area 101 and selects a second telecommunication mode for the business wireless communication when the wireless station 4 is located outside the area 101.

When the mode selector 13 selects the second telecommunication mode, a transmission signal processing circuit 20 generates a modulated signal by performing modulation processing on a sound signal and outputs the generated modulated signal to the business wireless communication circuit 23. The business wireless communication circuit 23 applies signal processing, such as frequency conversion, filtering, and amplification, to the modulated signal acquired from the transmission signal processing circuit 20 via a not-illustrated D/A converter and generates a transmission signal. The business wireless communication circuit 23 outputs the transmission signal to a predetermined channel via the antenna 34.

The business wireless communication circuit 23 applies signal processing, such as frequency conversion, filtering, and amplification, to an electrical signal acquired from the antenna 34 that generates an electrical signal based on captured radio waves, and generates a received signal. The business wireless communication circuit 23 outputs the generated received signal to a detector 19.

The detector 19 generates a demodulated signal by detecting the received signal acquired from the business wireless communication circuit 23 and outputs the demodulated signal to a received signal processing circuit 21. When the received signal processing circuit 21 acquires the demodulated signal from the detector 19, the received signal processing circuit 21 outputs the demodulated signal to an outputter 53 via a not-illustrated D/A converter.

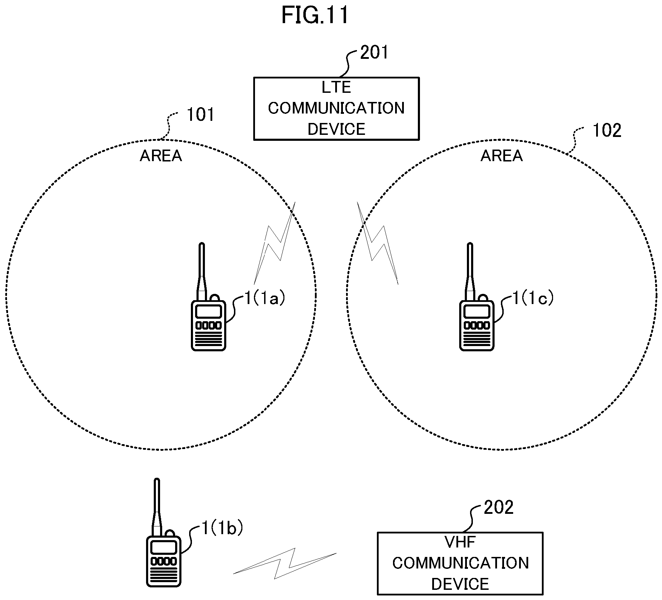

Fourth, the number of areas 101 is not limited to one, and a plurality of areas can be set. As illustrated in FIG. 11, areas 101 and 102 with which the first telecommunication mode for LTE communication is associated may be set. In other words, used frequency bands and telecommunication standards of the first telecommunication modes that correspond to a plurality of areas that the position determiner 12 determines, specifically the areas 101 and 102, are the same. On this occasion, a telecommunication mode for communication with the marine VHF is set as a second telecommunication mode. To distinguish wireless stations 1 from one another, the wireless station 1 located within the area 101, the wireless station 1 located within the area 102, and the wireless station 1 located within neither the area 101 nor the area 102, that is, located outside the area 101 and outside the area 102 are respectively referred to a wireless station 1a, a wireless station 1c, and a wireless station 1b.

Position determiners 12 included in the wireless stations 1a to 1c determine, with respect to the plurality of areas 101 and 102, whether or not the wireless station 1 is located within either the area 101 or the area 102.

When a switching instruction acceptor 11 included in the wireless station 1a accepts an instruction of switching from the reception mode to the transmission mode, a mode selector 13 included in the wireless station 1a selects the first telecommunication mode since the wireless station 1a is located within the area 101. As a result, the wireless station 1a communicates with the LTE communication device 201. When a switching instruction acceptor 11 included in the wireless station 1c accepts an instruction of switching from the reception mode to the transmission mode, a mode selector 13 included in the wireless station 1c selects the first telecommunication mode since the wireless station 1c is located within the area 102. As a result, the wireless station 1c communicates with the LTE communication device 201. When a switching instruction acceptor 11 included in the wireless station 1b accepts an instruction of switching from the reception mode to the transmission mode, a mode selector 13 included in the wireless station 1b selects the second telecommunication mode since the wireless station 1b is located outside the areas 101 and 102. As a result, the wireless station 1b communicates with the VHF communication device 202.

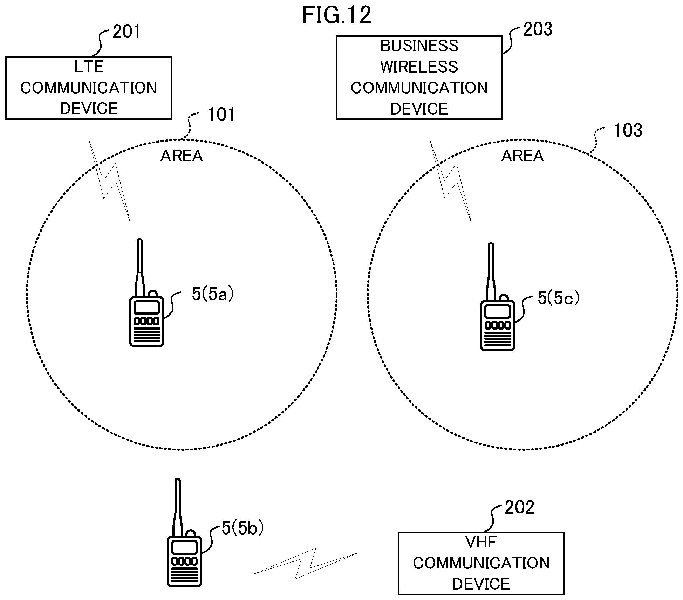

Among all telecommunication modes in which the wireless station 1 can perform communication, a telecommunication mode corresponding to at least one area may be different from a telecommunication mode corresponding to another area. Specifically, at least one of the used frequency bands and the telecommunication standards of the first telecommunication modes corresponding to the areas 101 and 102 may be different from each other. As illustrated in FIG. 12, an area 101 with which a first telecommunication mode for the LTE communication is associated and an area 103 with which a first telecommunication mode for the business wireless communication is associated may be set. On this occasion, a telecommunication mode for communication with the marine VHF is set as a second telecommunication mode. To distinguish wireless stations 5 from one another, the wireless station 5 located within the area 101, the wireless station 5 located within the area 103, and the wireless station 5 located within neither the area 101 nor the area 103, that is, located outside the area 101 and outside the area 103, are respectively referred to a wireless station 5a, a wireless station 5c, and a wireless station 5b.

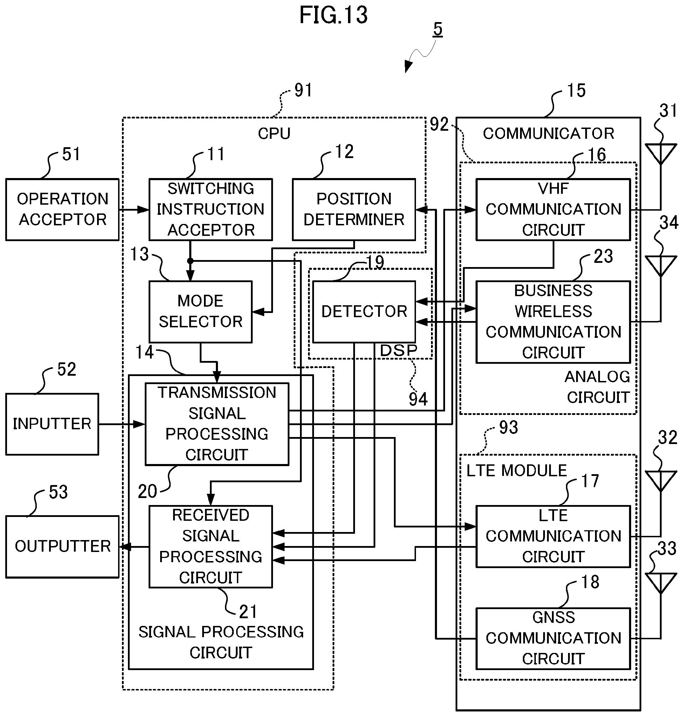

The wireless station 5 further includes, in addition to the configuration of the wireless station 1, a business wireless communication circuit 23 and an antenna 34, as illustrated in FIG. 13. Configurations and operations of the business wireless communication circuit 23 and the antenna 34 are the same as the configurations and operations of the business wireless communication circuit 23 that the communicator 15 included in the wireless station 4 illustrated in FIG. 10 includes and the antenna 34 included in the wireless station 4. A detector 19 included in the wireless station 5 operates in a similar manner to the detector 19 included in the wireless stations 1 and 4.

Operations of the wireless stations 5a and 5b are the same as the operations of the wireless stations 1a and 1b illustrated in FIG. 11. Operation of the wireless station 5c is the same as the operation of the wireless station 4 illustrated in FIG. 10. Specifically, when a switching instruction acceptor 11 included in the wireless station 5c accepts an instruction of switching from the reception mode to the transmission mode, a mode selector 13 included in the wireless station 5c selects the first telecommunication mode for the business wireless communication since the wireless station 5c is located within the area 103. As a result, the wireless station 5c communicates with the business wireless communication device 203.

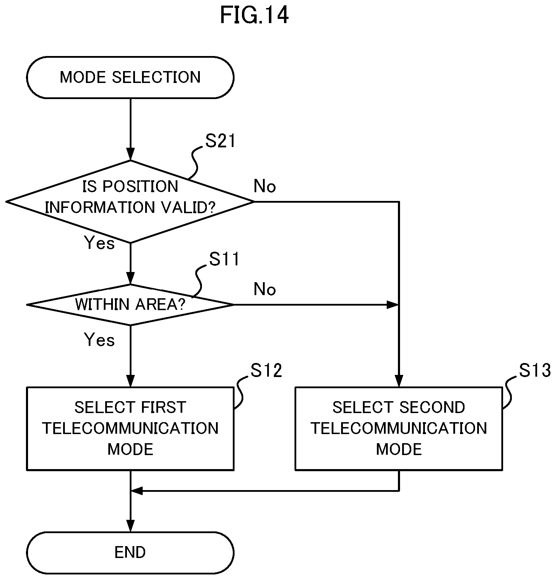

Fifth, the mode selection processing performed by the mode selector 13 is not limited to the above-described examples. As an example, the mode selector 13 may determine whether or not position information is valid. Specifically, when an instruction of switching from the reception mode to the transmission mode is accepted, the mode selector 13 starts mode selection processing illustrated in FIG. 14. The mode selector 13 determines whether or not position information acquired from the GNSS communication circuit 18 is valid (step S21). Specifically, the mode selector 13 determines whether or not the position information is valid, based on whether or not RMC data acquired from the GNSS communication circuit 18 are stored in a predefined format, whether or not a value of position information that the RMC data indicate falls within a predetermined range, or the like.

When the position information is valid (step S21; Yes), the mode selector 13 performs processing from step S11 onward as with Embodiment 1. When the position information is not valid, in other words, the position information is invalid (step S21; No), the mode selector 13 selects the second telecommunication mode (step S13). Through this processing, while valid position information cannot be acquired, the wireless station 1 can perform communication in the second telecommunication mode that corresponds to the outside of the area 101.

Sixth, the position determiner 12 may determine whether or not the wireless stations 1 to 5 are located within the area 101, 102, or 103, based on, without being limited to position information acquired from the GNSS communication circuit 18, other information. As an example, when the area 101 is associated with the first telecommunication mode for the LTE communication, the position determiner 12 may determine whether or not the wireless station 1 is located within the area 101, based on whether or not the LTE communication circuit 17 can communicate with a base station for the LTE communication.

Seventh, the telecommunication modes corresponding to the areas 101, 102, and 103 can be arbitrarily determined. As an example, communication with the marine VHF may be set as the first telecommunication mode corresponding to the area 101, and the LTE communication may be set as the second telecommunication mode. The area 101 is preferably included in a region in which analog wireless communication that uses a frequency band for the marine VHF can be performed. On this occasion, when the wireless station 1a is switched from the reception mode to the transmission mode, the mode selector 13 included in the wireless station 1a selects the first telecommunication mode for communication with the marine VHF. When the wireless station 1b is switched from the reception mode to the transmission mode, the mode selector 13 included in the wireless station 1b selects the second telecommunication mode for the LTE communication.

### Embodiment 2

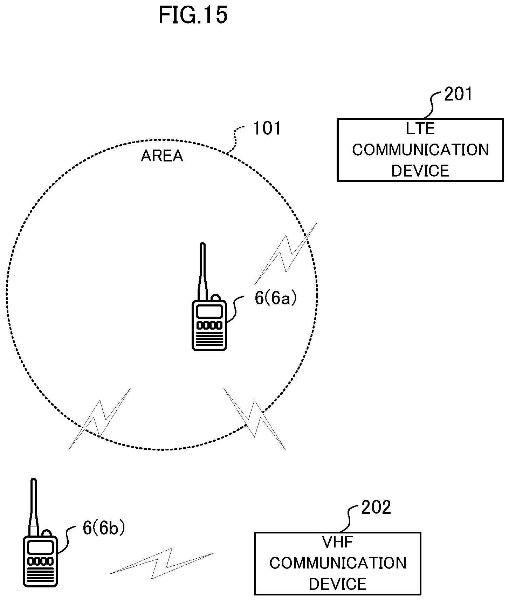

A switching method of telecommunication modes is not limited to the above-described examples. A wireless station 6 that switches telecommunication modes according to, in addition to a determination result of whether or not the wireless station 6 is located within an area 101, a received signal is illustrated in FIG. 15. In the example in FIG. 15, an area 101 associated with a first telecommunication mode for LTE communication is defined. On this occasion, a telecommunication mode for communication with a marine VHF is set as a second telecommunication mode. In FIG. 15, To distinguish wireless stations 6 from each other, the wireless station 6 located within the area 101 and the wireless station 6 located outside the area 101 are respectively referred to a wireless station 6a and a wireless station 6b.

The wireless station 6a communicates with an LTE communication device 201 in the LTE communication. The wireless station 6b communicates with a VHF communication device 202 with the marine VHF. On acceptance, by the wireless station 6a, of an instruction of switching from a reception mode to a transmission mode, when the wireless station 6a has been receiving a signal from the VHF communication device 202 or the wireless station 6b during a target period that is a latest predetermined period, the wireless station 6a communicates with the VHF communication device 202 or the wireless station 6b with the marine VHF. This function is referred to as a talk-back function. Length of the target period can be arbitrarily determined. In the wireless station 6, turning on and off of the talk-back function is switched by an operation of an operation acceptor 51.

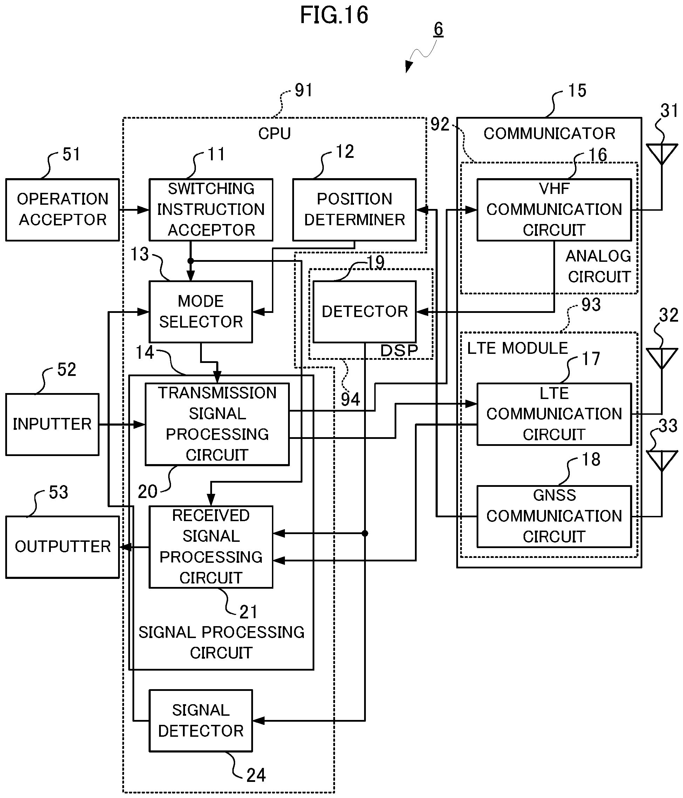

The wireless station 6 further includes, in addition to the configuration of the wireless station 1, a signal detector 24, as illustrated in FIG. 16. The signal detector 24 is achieved by a CPU 91. The signal detector 24 determines whether or not a signal in a used frequency band of the second telecommunication mode is received, that is, whether or not a signal in a frequency band for the marine VHF is received. Specifically, the signal detector 24 determines whether or not a signal level of a modulated signal that a detector 19 outputs is greater than or equal to a threshold value. When the signal level of the modulated signal is greater than or equal to the threshold value, it can be considered that the VHF communication circuit 16 is receiving a signal. The threshold value is only required to be set to a value that allows it to be considered that the VHF communication circuit 16 is receiving a signal, according to a minimum value of values that the signal level of the modulated signal can have when the VHF communication circuit 16 is receiving a signal. The signal detector 24 outputs a determination result to the mode selector 13.

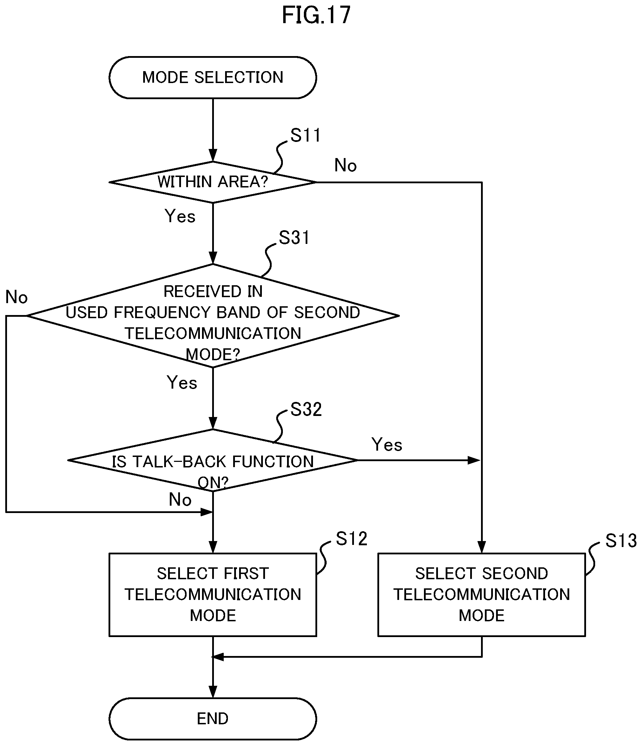

When a switching instruction acceptor 11 accepts an instruction of switching from the reception mode to the transmission mode, the mode selector 13 selects a telecommunication mode according to a determination result of a position determiner 12 and a determination result of the signal detector 24. Specifically, when the mode selector 13 is notified of having accepted an instruction of switching from the reception mode to the transmission mode by the switching instruction acceptor 11, the mode selector 13 starts mode selection processing illustrated in FIG. 17. Processing in steps S11, S12, and S13 illustrated in FIG. 17 are the same as the processing in steps S11, S12, and S13 illustrated in FIG. 7, respectively.

When the determination result acquired from the position determiner 12 indicates that the wireless station 1 is located within the area 101 (step S11; Yes) and the determination result acquired from the signal detector 24 indicates that no signal has been received in the used frequency band of the second telecommunication mode during the target period (step S31; No), the mode selector 13 selects the first telecommunication mode for the LTE communication (step S12).

When although the determination result acquired from the position determiner 12 indicates that the wireless station 1 is located within the area 101 (step S11; Yes) and the determination result acquired from the signal detector 24 indicates that a signal has been received in the used frequency band of the second telecommunication mode during the target period (step S31; Yes), the talk-back function is in an off state (step S32; No), the mode selector 13 selects the first telecommunication mode for the LTE communication (step S12).

When the determination result acquired from the position determiner 12 indicates that the wireless station 1 is located within the area 101 (step S11; Yes), the determination result acquired from the signal detector 24 indicates that a signal has been received in the used frequency band of the second telecommunication mode during the target period (step S31; Yes), and the talk-back function is in an on state (step S32; Yes), the mode selector 13 selects the second telecommunication mode for communication with the marine VHF (step S13).

When the processing in step S12 or S13 is finished, the mode selector 13 terminates the mode selection processing. The mode selector 13 outputs the first telecommunication mode selected in step S12 or the second telecommunication mode selected in step S13 to a transmission signal processing circuit 20 included in a signal processing circuit 14.

When the switching instruction acceptor 11 included in the wireless station 6a illustrated in FIG. 15 accepts an instruction of switching from the reception mode to the transmission mode and no signal in the used frequency band of the second telecommunication mode has been received during the target period, the mode selector 13 included in the wireless station 6a selects the first telecommunication mode. As a result, the wireless station 6a communicates with the LTE communication device 201. When the switching instruction acceptor 11 accepts an instruction of switching from the reception mode to the transmission mode and a signal in the used frequency band of the second telecommunication mode has been received during the target period, the mode selector 13 included in the wireless station 6a selects the second telecommunication mode. As a result, the wireless station 6a communicates with the VHF communication device 202 or the wireless station 6b.

As described in the foregoing, on acceptance, by the wireless station 6 according to Embodiment 2, of an instruction of switching from the reception mode to the transmission mode, the wireless station 6 performs communication in the second telecommunication mode when the wireless station 6 is located within the area 101 and has been receiving a signal in the used frequency band of the second telecommunication mode during the target period. On acceptance, by the wireless station 6, of an instruction of switching from the reception mode to the transmission mode, the wireless station 6 performs communication in the first telecommunication mode when the wireless station 6 is located within the area 101 and has not received a signal in the used frequency band of the second telecommunication mode during the target period.

Because of this configuration, the wireless station 6a located within the area 101 communicates with the LTE communication device 201 while the wireless station 6a is not receiving a signal from the VHF communication device 202 or the wireless station 6b located outside the area 101, and, when the wireless station 6a receives a signal from the VHF communication device 202 or the wireless station 6b, switches the telecommunication mode in an automated manner and becomes able to communicate with the VHF communication device 202 or the wireless station 6b.

The wireless station 6 according to Embodiment 2 can be subjected to various modifications in addition to being configured as described above.

First, the talk-back function may also be enabled when the wireless station 6 is located outside the area 101. On this occasion, the signal detector 24 determines whether the wireless station 6 is receiving a signal of signals in the used frequency bands of the first telecommunication mode and the second telecommunication mode the wireless station 6 and outputs a determination result. Specifically, the signal detector 24 determines that the wireless station 6 is receiving a signal in the used frequency band of the second telecommunication mode when a signal level of a modulated signal that the detector 19 outputs is greater than or equal to a threshold value. The signal detector 24 determines that the wireless station 6 is receiving a signal in the used frequency band of the first telecommunication mode when the signal detector 24 acquires sound packets from the LTE communication circuit 17.

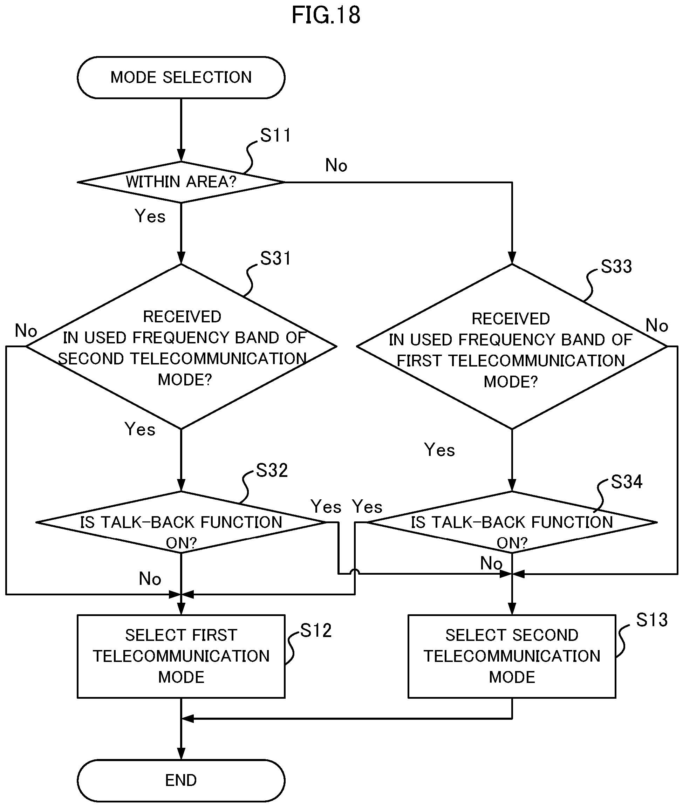

When the mode selector 13 is notified of having accepted an instruction of switching from the reception mode to the transmission mode by the switching instruction acceptor 11, the mode selector 13 starts mode selection processing illustrated in FIG. 18. Processing in steps S11 to S13, S31, and S32 illustrated in FIG. 18 are the same as the processing in steps S11 to S13, S31, and S32 illustrated in FIG. 17, respectively.

When the determination result acquired from the position determiner 12 indicates that the wireless station 1 is located outside the area 101 (step S11; No) and the determination result acquired from the signal detector 24 indicates that a signal has been received in the used frequency band of the first telecommunication mode during the target period (step S33; No), the mode selector 13 selects the second telecommunication mode for communication with the marine VHF (step S13).

When although the determination result acquired from the position determiner 12 indicates that the wireless station 1 is located outside the area 101 (step S11; No) and the determination result acquired from the signal detector 24 indicates that a signal has been received in the used frequency band of the first telecommunication mode during the target period (step S33; Yes), the talk-back function is in the off state (step S34; No), the mode selector 13 selects the second telecommunication mode for communication with the marine VHF (step S13).

When the determination result acquired from the position determiner 12 indicates that the wireless station 1 is located outside the area 101 (step S11; No), the determination result acquired from the signal detector 24 indicates that a signal has been received in the used frequency band of the first telecommunication mode during the target period (step S33; Yes), and the talk-back function is in the on state (step S34; Yes), the mode selector 13 selects the first telecommunication mode for the LTE communication (step S12).

Second, the talk-back function may be constantly set to the on state. On this occasion, the operation acceptor 51 does not have to have a function to switch the talk-back function between the on state and the off state.

In addition, the variations described in Embodiment 1 can be applied to Embodiment 2.

Additionally, the hardware configurations and the flowcharts described above are only examples and can be changed and modified arbitrarily.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A wireless station (1, 1a, 1b, 1c, 2, 3, 4, 5, 5a, 5b, 5c, 6, 6a, 6b) to perform communication in a plurality of telecommunication modes in which at least one of used frequency bands and telecommunication standards are different from each other, the wireless station (1, 1a, 1b, 1c, 2, 3, 4, 5, 5a, 5b, 5c, 6, 6a, 6b) comprising:
a position determiner (12) to determine, with respect to at least one area that indicates a geographical range associated with one of the telecommunication modes and is determined in advance, whether or not the wireless station (1, 1a, 1b, 1c, 2, 3, 4, 5, 5a, 5b, 5c, 6, 6a, 6b) is located within one of the at least one area;
a switching instruction acceptor (11) to accept an instruction to switch the wireless station (1, 1a, 1b, 1c, 2, 3, 4, 5, 5a, 5b, 5c, 6, 6a, 6b) between a transmission mode and a reception mode;
a mode selector (13) to select, when the switching instruction acceptor (11) accepts an instruction of switching to the transmission mode, a first telecommunication mode corresponding to the one of the at least one area within which the wireless station (1, 1a, 1b, 1c, 2, 3, 4, 5, 5a, 5b, 5c, 6, 6a, 6b) is located among the plurality of telecommunication modes in a case where the wireless station (1, 1a, 1b, 1c, 2, 3, 4, 5, 5a, 5b, 5c, 6, 6a, 6b) is determined to be located within the one of the at least one area by the position determiner (12) and a second telecommunication mode that is the telecommunication mode different from the first telecommunication mode in a case where the wireless station (1, 1a, 1b, 1c, 2, 3, 4, 5, 5a, 5b, 5c, 6, 6a, 6b) is determined not to be located within any of the at least one area by the position determiner (12);
a signal processing circuit (14) to generate, from an input signal, transmission data matching the first telecommunication mode or the second telecommunication mode that is selected by the mode selector (13); and
a communicator (15) to generate a transmission signal from the transmission data generated by the signal processing circuit (14) and transmit the transmission signal.

2. The wireless station (1, 1a, 1b, 1c, 2, 3, 4, 5, 5a, 5b, 5c, 6, 6a, 6b) according to claim 1, wherein
the communicator (15) receives a signal in the used frequency band of each of the telecommunication modes, and
in a case where the switching instruction acceptor (11) accepts an instruction of switching to the transmission mode and the wireless station (1, 1a, 1b, 1c, 2, 3, 4, 5, 5a, 5b, 5c, 6, 6a, 6b) is determined to be located within the one of the at least one area by the position determiner (12), the mode selector (13) selects the second telecommunication mode when the communicator (15) has been receiving a signal in the used frequency band of the second telecommunication mode during a target period that is a latest predetermined period and selects the first telecommunication mode when the communicator (15) has not received a signal in the used frequency band of the second telecommunication mode during the target period.

3. The wireless station (1, 1a, 1b, 1c, 2, 3, 4, 5, 5a, 5b, 5c, 6, 6a, 6b) according to claim 2, wherein in a case where the switching instruction acceptor (11) accepts an instruction of switching to the transmission mode and the wireless station (1, 1a, 1b, 1c, 2, 3, 4, 5, 5a, 5b, 5c, 6, 6a, 6b) is determined not to be located within any of the at least one area by the position determiner (12), the mode selector (13) selects the first telecommunication mode when the communicator (15) has been receiving a signal in the used frequency band of the first telecommunication mode during the target period and selects the second telecommunication mode when the communicator (15) has not received a signal in the used frequency band of the first telecommunication mode during the target period.

4. The wireless station (1, 1a, 1b, 1c, 2, 3, 4, 5, 5a, 5b, 5c, 6, 6a, 6b) according to any one of claims 1 to 3, wherein in a case where the switching instruction acceptor (11) accepts an instruction of switching to the transmission mode and the wireless station (1, 1a, 1b, 1c, 2, 3, 4, 5, 5a, 5b, 5c, 6, 6a, 6b) is determined to be located within the one of the at least one area by the position determiner (12), the mode selector (13) selects the first telecommunication mode conforming to a telecommunication standard of a public network.

5. The wireless station (1, 1a, 1b, 1c, 2, 3, 4, 5, 5a, 5b, 5c, 6, 6a, 6b) according to claim 4, wherein the position determiner (12) determines whether or not the wireless station (1, 1a, 1b, 1c, 2, 3, 4, 5, 5a, 5b, 5c, 6, 6a, 6b) is located within the one of the at least one area included in a region in which the wireless station (1, 1a, 1b, 1c, 2, 3, 4, 5, 5a, 5b, 5c, 6, 6a, 6b) can connect to the public network.

6. The wireless station (1, 1a, 1b, 1c, 2, 3, 4, 5, 5a, 5b, 5c, 6, 6a, 6b) according to claim 4 or 5, wherein in a case where the switching instruction acceptor (11) accepts an instruction of switching to the transmission mode and the wireless station (1, 1a, 1b, 1c, 2, 3, 4, 5, 5a, 5b, 5c, 6, 6a, 6b) is determined not to be located within any of the at least one area by the position determiner (12), the mode selector (13) selects the second telecommunication mode for analog wireless communication for a marine very high frequency (VHF) band as the used frequency band.

7. The wireless station (1, 1a, 1b, 1c, 2, 3, 4, 5, 5a, 5b, 5c, 6, 6a, 6b) according to claim 4 or 5, wherein in a case where the switching instruction acceptor (11) accepts an instruction of switching to the transmission mode and the wireless station (1, 1a, 1b, 1c, 2, 3, 4, 5, 5a, 5b, 5c, 6, 6a, 6b) is determined not to be located within any of the at least one area by the position determiner (12), the mode selector (13) selects the second telecommunication mode for digital wireless communication that uses a frequency band allocated to business wireless communication as the used frequency band.

8. The wireless station (1, 1a, 1b, 1c, 2, 3, 4, 5, 5a, 5b, 5c, 6, 6a, 6b) according to any one of claims 1 to 3, wherein in a case where the switching instruction acceptor (11) accepts an instruction of switching to the transmission mode and the wireless station (1, 1a, 1b, 1c, 2, 3, 4, 5, 5a, 5b, 5c, 6, 6a, 6b) is determined to be located within the one of the at least one area by the position determiner (12), the mode selector (13) selects the first telecommunication mode for analog wireless communication that uses a frequency band for a marine VHF as the used frequency band.

9. The wireless station (1, 1a, 1b, 1c, 2, 3, 4, 5, 5a, 5b, 5c, 6, 6a, 6b) according to claim 8, wherein the position determiner (12) determines whether or not the wireless station (1, 1a, 1b, 1c, 2, 3, 4, 5, 5a, 5b, 5c, 6, 6a, 6b) is located within the one of the at least one area included in a region in which analog wireless communication that uses a frequency band for the marine VHF can be performed.

10. The wireless station (1, 1a, 1b, 1c, 2, 3, 4, 5, 5a, 5b, 5c, 6, 6a, 6b) according to claim 8 or 9, wherein in a case where the switching instruction acceptor (11) accepts an instruction of switching to the transmission mode and the wireless station (1, 1a, 1b, 1c, 2, 3, 4, 5, 5a, 5b, 5c, 6, 6a, 6b) is determined not to be located within any of the at least one area by the position determiner (12), the mode selector (13) selects the second telecommunication mode conforming to a telecommunication standard of a public network.

11. The wireless station (1, 1a, 1b, 1c, 2, 3, 4, 5, 5a, 5b, 5c, 6, 6a, 6b) according to any one of claims 1 to 10, wherein the switching instruction acceptor (11) accepts an instruction of switching between the transmission mode and the reception mode from a single operation switch that performs switching between the transmission mode and the reception mode by a mechanical action.

12. The wireless station (1, 1a, 1b, 1c, 2, 3, 4, 5, 5a, 5b, 5c, 6, 6a, 6b) according to any one of claims 1 to 11, wherein
the at least one area is a plurality of areas, and
the position determiner (12) determines, with respect to the plurality of areas, whether or not the wireless station (1, 1a, 1b, 1c, 2, 3, 4, 5, 5a, 5b, 5c, 6, 6a, 6b) is located within one of the plurality of areas.

13. The wireless station (1, 1a, 1b, 1c, 2, 3, 4, 5, 5a, 5b, 5c, 6, 6a, 6b) according to claim 12, wherein the used frequency bands and the telecommunication standards of the first telecommunication modes each of which corresponds to one of the plurality of areas are the same as each other.

14. The wireless station (1, 1a, 1b, 1c, 2, 3, 4, 5, 5a, 5b, 5c, 6, 6a, 6b) according to claim 12, wherein at least one of the used frequency band and the telecommunication standard of the first telecommunication mode corresponding to at least one of the plurality of areas is different from a corresponding one of the used frequency band and the telecommunication standard of the first telecommunication mode corresponding to another one of the plurality of areas.

15. A communication method to be performed by a wireless station (1, 1a, 1b, 1c, 2, 3, 4, 5, 5a, 5b, 5c, 6, 6a, 6b) to perform communication in a plurality of telecommunication modes in which at least one of used frequency bands and telecommunication standards are different from each other, the communication method comprising:
determining, with respect to at least one area that indicates a geographical range associated with one of the telecommunication modes and is determined in advance, whether or not the wireless station (1, 1a, 1b, 1c, 2, 3, 4, 5, 5a, 5b, 5c, 6, 6a, 6b) is located within one of the at least one area;
accepting an instruction to switch the wireless station (1, 1a, 1b, 1c, 2, 3, 4, 5, 5a, 5b, 5c, 6, 6a, 6b) between a transmission mode and a reception mode;
selecting, when an instruction of switching to the transmission mode is accepted, a first telecommunication mode corresponding to the one of the at least one area within which the wireless station (1, 1a, 1b, 1c, 2, 3, 4, 5, 5a, 5b, 5c, 6, 6a, 6b) is located among the plurality of telecommunication modes in a case where the wireless station (1, 1a, 1b, 1c, 2, 3, 4, 5, 5a, 5b, 5c, 6, 6a, 6b) is determined to be located within the one of the at least one area and a second telecommunication mode that is the telecommunication mode different from the first telecommunication mode in a case where the wireless station (1, 1a, 1b, 1c, 2, 3, 4, 5, 5a, 5b, 5c, 6, 6a, 6b) is determined not to be located within any of the at least one area;
generating, from an input signal, transmission data matching the selected first telecommunication mode or second telecommunication mode; and
generating a transmission signal from the transmission data and transmitting the transmission signal.
